# EUROPEAN PATENT APPLICATION

(11) **EP 4 699 430 A1**
(43) Date of publication of application: **25.02.2026**
(21) Application number: 25157818.3
(22) Date of filing: 13.02.2025
(51) Int. Cl.: A01D 34/73, A01D 34/416, A01D 34/82

(54) **CUTTING ASSEMBLY AND LAWN MOWER**

(30) Priority: 23.08.2024 CN 202411170403; 23.08.2024 CN 202422062306 U
(71) Applicant: Willand (Beijing) Technology Co., Ltd., Beijing 100192 (CN)
(72) Inventor: LIANG, Ping, BEIJING, 100192 (CN); QIAO, Wanyang, BEIJING, 100192 (CN)
(74) Representative: Regimbeau

(57) **Abstract**

A cutting assembly and a lawn mower are provided. The cutting assembly includes a cutter head, a protection member, blocking members, and a cutting member. The cutter head is connected to the lawn mower body. The protection member is snap-fitted with the cutter head. The blocking members are arranged in a circumferential direction of the protection member and are provided between the cutter head and the protection member. Each of the blocking members includes a protrusion protruding toward a center of the cutter head. The protection member, the cutter head and the protrusion form and enclose a protection space, the protection space being located on a side of the protrusion proximate to an edge of the cutter head. The cutting member is rotatably provided in the protection space, the cutting member extends at least partially beyond the protection space, and the cutting member is configured for cutting plants.

## Description

### TECHNICAL FIELD

The present application relates to the technical field of lawn mowers, in particular, to a cutting assembly and a lawn mower.

### BACKGROUND

At present, generally, a cutter head of a lawn mower rotates to drive a cutting member on the cutter head to perform a mowing operation. In the related art, the cutting member of the cutter head is easily stuck by mud or wound by grass. The stuck mud and the wound grass are not only difficult to clean, but also affect the cutting efficiency of the cutting assembly. Further, in a case of too much stuck mud and wound grass, the cutting member may be damaged.

### SUMMARY

The present application provides a cutting assembly and a lawn mower, which may reduce the phenomenon of the mud sticking and the grass winding, and reduce the damage to the cutting member.

In an aspect, the present application provides a cutting assembly for connecting to a lawn mower body, comprising: a cutter head, configured to be connected to the lawn mower body; a protection member snap-fitted with the cutter head, in which the protection member and the cutter head form and enclose a protection space; and a cutting member. The cutting member is rotatably arranged in the protection space, the cutting member extends at least partially to the outside of the protection space, and the cutting member is configured for a cutting operation.

In another aspect, the present application provides a cutting assembly. The cutting assembly includes a cutter head, a protection member, a plurality of blocking members, and a cutting member. The cutter head is configured to be connected to the lawn mower body. The protection member is snap-fitted with the cutter head. The plurality of blocking members are arranged in a circumferential direction of the protection member and are provided between the cutter head and the protection member. Each of the plurality of blocking members includes a protrusion protruding toward a center of the cutter head. The protection member, the cutter head and the protrusion form and enclose a protection space. The protection space is located on a side of the protrusion proximate to an edge of the cutter head. The cutting member is rotatably arranged in the protection space, the cutting member extends at least partially to the outside of the protection space, and the cutting member is configured for cutting plants.

The cutting assembly provided in the present application is connected to the lawn mower body through the cutter head, and the cutting assembly may perform cutting operations on lawns in different areas along with the movement of the lawn mower body. Since the blocking members are arranged between the cutter head and the protection member, and each of the plurality of blocking members includes the protrusion protruding toward the center of the cutter head, when the protection member is snap-fitted with the cutter head, the protrusion of the blocking member, the cutter head and the protection member form and enclose a protection space. Since there are a plurality of blocking members and the plurality of blocking members are arranged in the circumferential direction of the protection member, there are also a plurality of protection spaces, and the plurality of protection spaces are arranged in the circumferential direction of the protection member. The protection space is located on a side of the protrusion proximate to the edge of the cutter head, that is, the cutting member is located on a side of the protrusion proximate to the edge of the cutter head. Since at least a portion of the cutting member extends to the outside of the protection space, that is, the remaining portion of the cutting member is located in the protection space, a portion of the cutting member extending to the outside of the protection space is configured for cutting plants, and the portion of the cutting member located in the protection space may be protected by the protection space from contact with dirt and weeds. Since the cutting member is rotatably arranged in the protection space, when the cutting member hits a hard object, the cutting member may rotate into the protection space, thereby reducing the damage to the cutting member. Thus, with the cutting assembly provided in the present application, the phenomenon of the mud sticking and the grass winding may be reduced, and the damage to the cutting member may be reduced.

**In** a possible implementation of the present application, each of the plurality of blocking members further includes a blocking part. The blocking part is arranged along a peripheral edge of the protection member or a peripheral edge of the cutter head, and an end of the blocking part is connected to an end of the protrusion.

**In** a possible implementation of the present application, the cutting assembly further includes a fixing member. The fixing member sequentially passes through the cutter head, the cutting member and the protection member to rotatably arrange the cutting member in the protection space.

**In** a possible implementation of the present application, the cutting assembly further includes a fixing member. The fixing member sequentially passes through the cutter head and the protection member, and is arranged proximate to the blocking part.

**In** a possible implementation of the present application, the cutting member includes a mounting through-hole. The mounting through-hole is configured for rotatably arranging the cutting member in the protection space. The cutting member further includes a cutting end arranged away from the mounting through-hole. A distance between a bottom surface of the protrusion and the mounting through-hole is greater than a distance between the cutting end and the mounting through-hole. The bottom surface is a surface of the protrusion parallel to an axis of the cutter head.

In a possible implementation of the present application, one of the cutter head and the protection member is provided with a first mounting part which mates with the fixing member. The fixing member is connected to the first mounting part, and the cutting member is sleeved on the fixing member by means of the mounting through-hole.

In a possible implementation of the present application, one of the cutter head and the protection member, which is not provided with the first mounting part, is provided with an evading recess. The evading recess is arranged in alignment with the first mounting part. A first end of the fixing member is connected to the first mounting part, and a second end of the fixing member is received in the evading recess.

In a possible implementation of the present application, one of the cutter head and the protection member is provided with a first mounting part which mates with the fixing member, and another one of the cutter head and the protection member is provided with a detaching through-hole. The detaching through-hole is arranged in alignment with the first mounting part, and the fixing member passes through the detaching through-hole and is connected to the first mounting part.

In a possible implementation of the present application, one of the cutter head and the protection member is provided with a boss. The boss extends from the cutter head or the protection member into the protection space in an extension direction of the axis, and the boss mates with the mounting through-hole. The cutting member is sleeved on the boss by means of the mounting through-hole.

In a possible implementation of the present application, the protection member includes an abutting part in a region proximate to an axis of the cutter head. The abutting part is provided with a through opening in an extension direction of the axis. The through opening is coaxial with the axis. The abutting part is abutted against an abutting region of the cutter head.

In a possible implementation of the present application, the abutting part extends from the region of the protection member proximate to the axis of the cutter head to a side of the protection member proximate to the cutter head, and a shape of the abutting region mates with a shape of the abutting part.

In a possible implementation of the present application, an outer diameter of the protection member is less than or equal to an outer diameter of the cutter head.

In a possible implementation of the present application, the cutter head is provided with a plurality of reinforcing parts. Each of the plurality of reinforcing parts extends on the cutter head in a radial direction of the cutter head, and the plurality of reinforcing parts are distributed in a circumferential direction of the cutter head.

In another aspect, the present application provides a lawn mower. The lawn mower includes a lawn mower body, a cutting actuator, and the cutting assembly as described in any one of the above implementations. A fixed end of the cutting actuator is arranged on the lawn mower body. A connecting structure of the cutter head is connected to an output end of the cutting actuator, and the cutting actuator is capable of driving the cutting assembly into rotation.

In a possible implementation of the present application, the cutter head further includes a positioning structure, and the output end is provided with a positioning part which mates with the positioning structure. The positioning structure is connected to the positioning part to limit a position of the cutter head relative to the output end.

Since the lawn mower provided in the present application includes the cutting assembly as described in any one of the above implementations, the lawn mower has the same technical effect, that is, the phenomenon of the mud sticking and the grass winding may be reduced, and the damage to the cutting member may be reduced.

### BRIEF DESCRIPTION OF THE DRAWINGS

FIG. 1 is a sectional view of a lawn mower according to the present application;
FIG. 2 is a first front view of a cutting assembly according to the present application;
FIG. 3 is a first schematic view of a cutting assembly according to the present application;
FIG. 4 is a first schematic view of a cutter head in a cutting assembly according to the present application;
FIG. 5 is a second schematic view of a cutter head in a cutting assembly according to the present application;
FIG. 6 is a first schematic view of a protection member in a cutting assembly according to the present application;
FIG. 7 is a second schematic view of a protection member in a cutting assembly according to the present application;
FIG. 8 is a second schematic view of a cutting assembly according to the present application;
FIG. 9 is a first exploded view (front view) of a cutting assembly according to the present application;
FIG. 10 is a first partial cross-sectional schematic view (front view) of a cutting assembly according to the present application;
FIG. 11 is a partial enlarged schematic view of D in FIG. 10 according to the present application;
FIG. 12 is a second partial cross-sectional schematic view (front view) of a cutting assembly according to the present application;
FIG. 13 is a partial enlarged schematic view of E in FIG. 12 according to the present application;
FIG. 14 is a third schematic view of a cutting assembly according to the present application;
FIG. 15 is a partial schematic view of a cutting assembly according to the present application;
FIG. 16 is a second exploded view (front view) of a cutting assembly according to the present application;
FIG. 17 is a third partial cross-sectional schematic view (front view) of a cutting assembly according to the present application;
FIG. 18 is a partial enlarged schematic view of F in FIG. 17 according to the present application; and

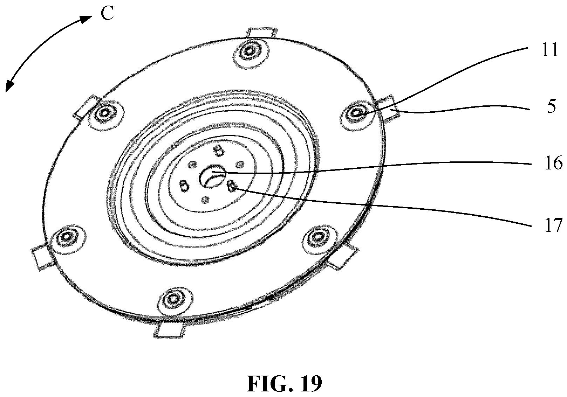

FIG. 19 is a fourth schematic view of a cutting assembly according to the present application.

### Description of the reference numerals:

1-cutter head; 11-first mounting part; 12-abutting region; 13-connecting hole; 14-reinforcing part; 15-boss; 16-connecting structure; 17-positioning structure; 2-protection member; 21-evading recess; 22-detaching through-hole; 23-abutting part; 24-through opening; 25-connecting part; 3-blocking member; 31-protrusion; 311-bottom surface; 32-blocking part; 4-protection space; 5-cutting member; 51-mounting through-hole; 52-cutting end; 6-fixing member; 61-first end; 62-second end; 7-connecting member; 8-lawn mower body; A-radial direction; B-axis direction; C-circumferential direction; G-axis.

### DETAILED DESCRIPTION

In order to make the objectives, technical solutions and advantages of the present application clearer, the specific technical solutions of the present application are further described in details below in combination with the accompanying drawings in the embodiments of the present application. The following embodiments are merely used for describing the present application, rather than limiting the scope of the present application.

In the embodiments of the present application, the terms "first" and "second" are only used for description and should not be understood to indicate or imply relative importance or implicitly indicate the number of indicated technical features. Therefore, the features defined by "first" and "second" may explicitly or implicitly indicate inclusion of one or more such features. In the description of the embodiments of the present application, unless otherwise described, the term "multiple" means two or more.

Further, in the embodiments of the present application, the orientation terms such as "upper", "lower", "left" and "right" are defined with respect to the orientation in which the components are schematically placed in the drawings. It should be understood that these orientation terms are relative concepts that are used for relative description and clarification, and may vary accordingly depending on changes in the orientation in which the components are placed in the drawings.

In the embodiments of the present application, unless otherwise definitely specified and limited, the term "connect" should be broadly understood. For example, the term "connect" may refer to fixed connection, detachable connection or integration. The term "connect" may refer to direct connection, and may also refer to indirect connection through a medium.

In the embodiments of the present application, terms "include", "comprise" or any other variants thereof are intended to cover non-exclusive inclusion, so that a process, a method, an article or a device including a series of elements not only includes those elements, but also includes those that are not explicitly listed, or also includes elements inherent to the process, the method, the article, or the device. In the case that there are no more limitations, an element defined by the phrase "including a..." does not exclude the existence of other same elements in the process, the method, the article, or the device that includes the element.

In the embodiments of the present application, terms "exemplary" or "for example" are used to refer to an example, illustration or description. Any embodiment or design defined by "exemplary" or "for example" in the embodiments of the present application should not be construed as being more preferred or advantageous over other embodiments or designs. Specifically, the use of the terms "exemplary" or "for example" is intended to present related concepts in a specific manner.

The lawn mower has wide and diverse usage scenarios, such as family gardens, park green spaces, golf courses, and various lawn maintenance places, and so on. When the lawn is overgrown to affect the aesthetic and daily activities, the lawn mower may mow the lawn by means of a sharp cutting member 5.

Generally, the lawn mower is composed of a cutter head 1, a mowing motor, a traveling motor, a control system, universal wheels and other structures. Generally, the lawn mower has a structure in which the cutter head 1 is mounted on a lawn mower body 8, and the cutting member 5 is mounted on the cutter head 1. The cutting member 5 mows the grass by the rotation of the mowing motor. The high-speed rotation of the mowing motor greatly increases the mowing speed of the lawn mower, thereby saving the operating time of the weeding worker, and reducing a lot of human resources.

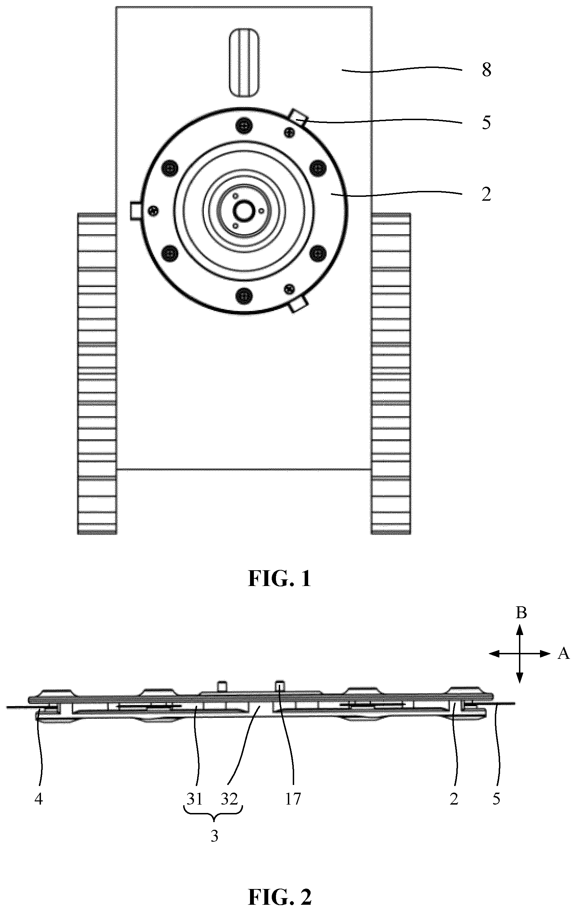

With reference to FIG. 1, the present application provides a lawn mower. The lawn mower includes a lawn mower body 8, a cutting actuator, and a cutting assembly. A fixed end of the cutting actuator is arranged on the lawn mower body 8. A connecting structure 16 of the cutter head 1 is connected to an output end of the cutting actuator, and the cutting actuator is capable of driving the cutting assembly into rotation.

In the embodiments of the present application, the cutting actuator is configured to connect the lawn mower body 8 with the cutting assembly, and to drive the cutting assembly into rotation relative to the lawn mower body 8. The cutting actuator may be a motor, an electric machine, an engine, or the like. Exemplarily, when the cutting actuator is an electric motor, a fixed end of the electric motor (typically a housing or a specific mounting portion of the motor) is mounted on the lawn mower body 8 through a bolt, a nut or other fastening means, and an output end of the electric motor (typically a rotor shaft or a specific driving shaft) is connected to the cutting assembly through the connecting structure 16, so that the electric motor converts the electrical energy into the mechanical energy through a power system (such as a battery pack, a power cord, etc.) on the lawn mower body 8 to drive the cutting assembly into rotation, so as to allow the cutting assembly to perform the cutting operation.

In the embodiments of the present application, the connection between the cutter head 1 and output end of the cutting actuator may be a direct connection or an indirect connection, and the connecting structure 16 may be adjusted according to the structure of the output end of the cutting actuator. Exemplarily, when the cutting actuator is an electric motor, the connecting structure 16 may be a transmission member arranged on the cutter head 1, such as a transmission shaft, a gear, or the like. The output shaft of the electric motor is connected to the transmission member on the cutter head 1, so that the mechanical energy from the motor drives the cutting assembly into rotation.

In the lawn mower provided in the embodiments of the present application, the fixed end of the cutting actuator is provided on the lawn mower body 8, and the output end of the cutting actuator is tightly fitted with the connecting structure 16 on the cutter head 1, thereby realizing the stable installation of the cutting assembly. Since the connecting structure 16 of the cutter head 1 is connected to the output end of the cutting actuator, the cutting assembly may be driven by the cutting actuator to rotate at a high speed, so that the cutting assembly may cut the weeds more effectively.

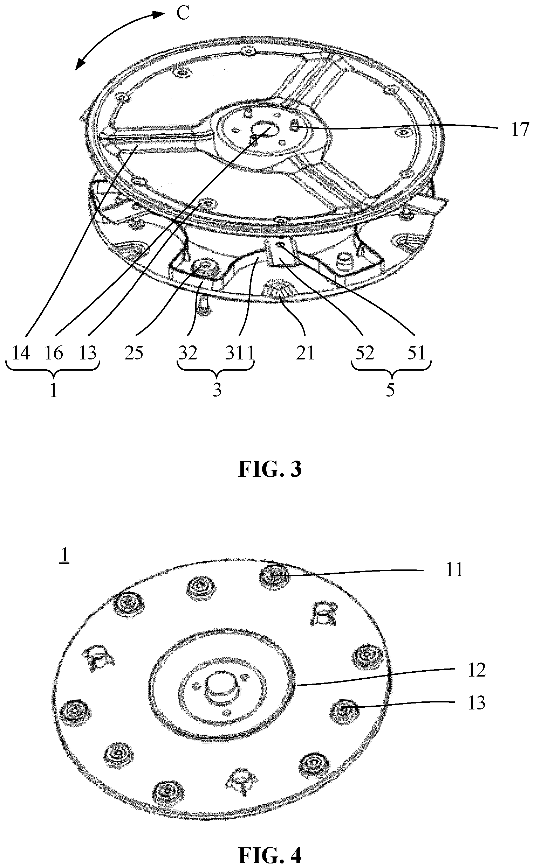

With reference to FIG. 2 and FIG. 3, in some embodiments of the present application, the cutter head 1 further includes a positioning structure 17, and the output end is provided with a positioning part which mates with the positioning structure 17. The positioning structure 17 is connected to the positioning part to limit a position of the cutter head 1 relative to the output end.

In the embodiments of the present application, the positioning structure 17 and the positioning part may be positioned by pin-hole structure, thread structure, magnetic structure, snap structure, or the like. Exemplarily, with reference to FIG. 3, the positioning structure 17 may be a positioning protrusion arranged on the cutter head 1 in a region proximate to an axis G. The positioning protrusion extends from a side of the cutter head 1 proximate to the fixed end of the cutting actuator to the fixed end of the cutting actuator in an axis direction B. The positioning part on the fixed end of the cutting actuator may be provided as a positioning recess which mates with the positioning protrusion. When the cutter head 1 is connected to the output end of the cutting actuator, the positioning protrusion on the cutter head 1 cooperates with the positioning recess on the fixed end of the cutting actuator, so as to limit the relative position between the cutter head 1 and the fixed end of the cutting actuator.

In the lawn mower provided in the embodiments of the present application, the cooperation between the positioning structure 17 and the positioning part may limit the position of the cutter head 1 relative to the fixed end of the cutting actuator, so as to improve the coaxiality and centering degree of connection between the cutter head 1 and the fixed end of the cutting actuator, and reduce the position deviation of the cutter head 1 and the cutting actuator caused by installation error or vibration, thereby improving the stability between the cutter head 1 and the fixed end of the cutting actuator, and improving the stability during the rotation of the cutting assembly.

In the related art, after the lawn mower has been operated for a period of time, the cutting member 5 of the lawn mower is easily stuck by grass or mud, especially locking the screw for the cutting member 5, which may directly decrease the operating efficiency of the lawn mower. If too much grass or mud is caught, the cutting member 5 may be stuck, so that the cutting member 5 cannot be thrown out, or the cutting member 5 cannot be swung after being stuck completely, and thus the cutting member 5 may be damaged when it hits a hard object. Meanwhile, it is troublesome to clean the caught grass or mud.

With reference to FIG. 2, FIG. 3 and FIG. 8, the present application provides a cutting assembly. The cutting assembly includes a cutter head 1, a protection member 2, a plurality of blocking members 3, and a cutting member 5. The cutter head 1 is configured to be connected to the lawn mower body 8. The protection member 2 is snap-fitted with the cutter head 1. The plurality of blocking members 3 are arranged in a circumferential direction of the protection member 2 and are provided between the cutter head 1 and the protection member 2. Each of the plurality of blocking members 3 includes a protrusion 31 protruding toward a center of the cutter head 1. The protection member 2, the cutter head 1 and the protrusion 31 form and enclose a protection space 4. The protection space 4 is located on a side of the protrusion 31 proximate to an edge of the cutter head 1. The cutting member 5 is rotatably arranged in the protection space 4. The cutting member 5 extends at least partially to the outside of the protection space 4, and the cutting member 5 is configured for cutting plants.

In the embodiments of the present application, the cutter head 1 is connected to the output shaft of the cutting actuator. The cutter head 1 supports the protection member 2, the blocking members 3 and the cutting member 5, and transmits the power from the output end of the cutting actuator. The cutter head 1 may be provided in any shape, and is generally designed in a circular shape or a circular-like shape. There may be no relative rotation between the protection member 2 and the cutter head 1, and the cutter head 1 is driven by the output shaft of the actuator to drive the protection member 2 to rotate with the cutter head together.

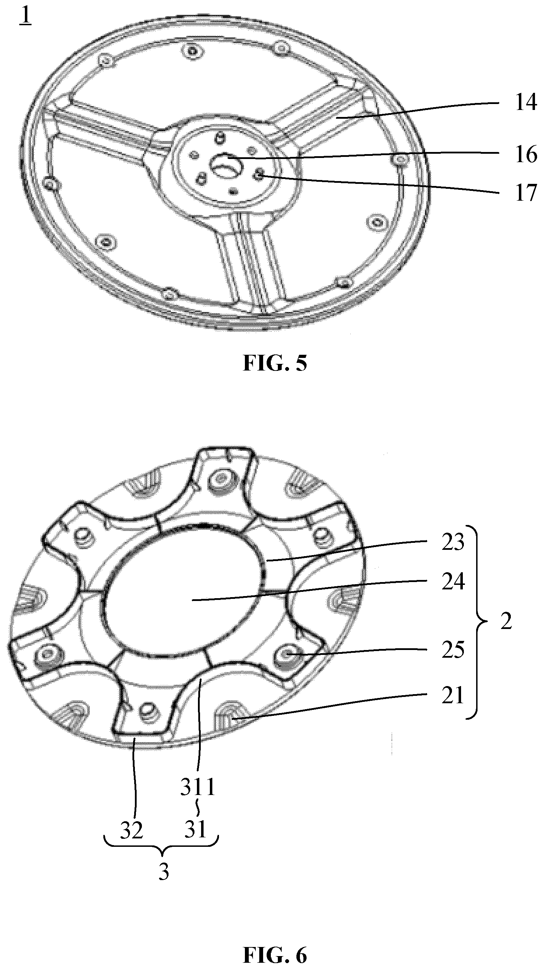

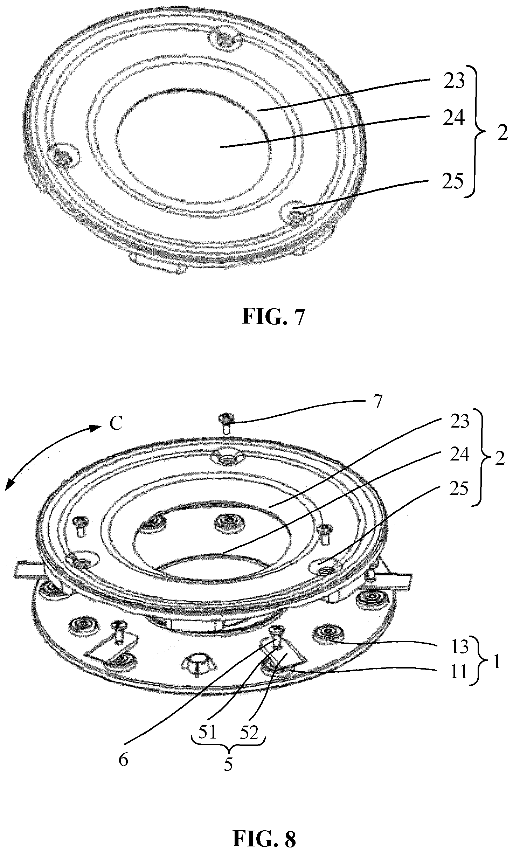

With reference to FIG. 6 and FIG. 7, in the embodiments of the present application, the protection member 2 may be in an annular shape, a hood shape or other shapes, the specific shape of the protection member depends on the overall design and the protection requirements of the cutting assembly. The protection member 2 may be made of a wear-resistant and corrosion-resistant material, such as metal, plastic, composite material, or the like. Exemplarily, the protection member 2 may be a thin metal member or plastic member which is not easily deformed. If the protection member 2 is a metal member, a thickness of the protection member 2 may range from 0.5 mm to 1.5 mm. If the protection member 2 is a plastic member, the thickness of the protection member 2 may range from 2 mm to 5.5 mm.

With reference to FIG. 8, in the embodiments of the present application, the method for connecting the protection member 2 to the cutter head 1 includes fixing the protection member 2 on the cutter head 1 by a bolt, so that the detachment and replacement of the protection member 2 and the cutter head 1 may be easily realized, and the stability of the protection member 2 may be controlled by adjusting the tightening degree of the bolt. The protection member 2 and the cutter head 1 may be welded together to form an integral structure, which may improve the strength and the stability of the protection member 2 and the cutter head 1. The method for connecting the protection member 2 to the cutter head 1 may be other connection methods.

With reference to FIG. 3, in the embodiments of the present application, the blocking members 3 are provided between the cutter head 1 and the protection member 2. That is, when the protection member 2 is snap-fitted with the cutter head 1, the blocking members 3 are provided between opposite sides of the protection member 2 and the cutter head 1. When the protection member 2 is connected to the cutter head 1, there is a gap between the protection member 2 and the cutter head 1. Within this gap, the blocking members 3 extend from a surface on a side of the protection member 2 proximate to the cutter head 1 toward the cutter head 1, or the blocking members 3 extend from a surface on a side of the cutter head 1 proximate to the protection member 2 toward the protection member 2. In this way, the blocking members 3 may form a blocking barrier in the gap between the protection member 2 and the cutter head 1 in an axial direction of the cutter head 1.

In the embodiments of the present application, when the protection member 2 is snap-fitted with the cutter head 1, the blocking members 3 may be abutted against the protection member 2 and the cutter head 1, so that the blocking members 3 effectively prevent the external dirt, water, weeds from entering the protection space 4, and reduce the relative movement between the protection member 2 and the cutter head 1 caused by vibration or impact, thereby improving the stability of the overall structure.

In the embodiments of the present application, in order to improve the strength and durability of the blocking member 3, the blocking member 3 may be made of the same material as the protection member 2 or a material having higher wear resistance and corrosion resistance. A shape of the blocking member 3 may be adjusted according to the specific shape and size of the cutter head 1, so that the blocking members 3 may be tightly fitted with the cutter head 1. Exemplarily, if there is an uneven structure on the surface of the cutter head 1, the blocking member 3 may have a shape mating with the cutter head 1, so as to improve the sealing effect. In addition, it is also possible to consider that an anti-skid structure or a shock-absorbing structure is added onto the blocking member 3, so as to further improve the stability and safety of the overall structure.

In the embodiments of the present application, each of the plurality of blocking members 3 includes a protrusion 31 protruding toward a center of the cutter head 1. With reference to FIG. 6, the protrusion 31 protrudes in a radial direction of the cutter head 1 toward the center of the cutter head 1, the center of the cutter head 1 being located on the axis of the cutter head 1. When the protection member 2 is snap-fitted with the cutter head 1, the blocking members 3 are abutted against the protection member 2 and the cutter head 1. In this case, a side of the protrusion 31 away from the axis of the cutter head 1, and the opposite sides of the protection member 2 and the cutter head 1 may form and enclose a protection space 4. The protection space 4 is provided with an opening. The opening of the protection space 4 is directed away from the axis of the cutter head 1, and is located on a circumferential side of the cutter head 1.

In the embodiments of the present application, there are a plurality of blocking members 3. That is, there are a plurality of protection spaces 4. Exemplarily, the number of the protection spaces 4 may be at least two, or may be three, four, five, six, or the like, which is not limited in the present application. The plurality of protection spaces 4 are arranged in a circumferential direction C of the protection member 2. Exemplarily, when the number of the protection spaces 4 is an even number such as two or four, the protection spaces 4 may be uniformly arranged in the circumferential direction C of the protection member 2. The protection spaces 4 may be distributed symmetrically along the diameter of the protection member 2 in the circumferential direction C of the protection member 2. When the number of the protection spaces 4 is an odd number such as three or five, the protection spaces 4 may be uniformly arranged in the circumferential direction C of the protection member 2.

In the embodiments of the present application, the plurality of blocking members 3 may have an integral design or a split design. The plurality of blocking members 3 may be integrally implemented through a process such as injection molding, die casting, or forging. The integral structure is compact and has strong integrity, so that the assembly error of the blocking members 3 is reduced. The plurality of blocking members 3 may be connected to each other by screw connection, snap connection or magnetic connection, and then are fixed on the protection member 2 or the cutter head 1. With the split connection, the damaged components are easily replaced separately, thereby reducing the maintenance costs.

Since the plurality of protection spaces 4 are arranged in the circumferential direction C of the protection member 2, thus when the cutting assembly rotates at a high speed, the dynamic balance of the cutting assembly may be improved, and meanwhile, the noise, which is generated by collision due to instability when the cutting assembly rotates at a high speed, may be reduced.

In the embodiments of the present application, the protection space 4 is a semi-closed space. When the cutting assembly performs the cutting operation, the cutting assembly is driven by the cutting actuator to rotate at a high speed. Due to the centrifugal force, impurities, such as dirt and weeds, are thrown away from the cutter head 1 and the cutting member 5. Since the opening of the protection space 4 is directed away from the axis G of the cutter head 1, it is more difficult for these impurities to directly enter the protection space 4. Meanwhile, the cutting assembly is driven by the cutting actuator to rotate at a high speed, so that the air pressure in the protection space 4 is greater than the air pressure outside the protection space, thereby reducing the situation in which the external dirt and weeds enter the protection space 4.

In the embodiments of the present application, the cutting member 5 is arranged in the protection space 4. A portion of the cutting member 5 is located in the protection space 4, and is supported by a sidewall and a bottom portion of the protection space 4. The remaining portion of the cutting member protrudes beyond the opening of the protection space 4, so as to contact and cut the vegetation such as weeds. At least a portion of the cutting member 5 is located outside the protection space 4, and this portion of the cutting member 5 not only directly participates in cutting during operation, but also plays a role in blocking the external impurities. When the cutting member 5 rotates, the rotational trajectory around the periphery of the cutting member may form a relatively closed area, which further reduces the opportunity that impurities enter the protection space 4.

**In** the embodiments of the present application, the cutting member 5 is rotatably arranged in the protection space 4. With the high-speed rotation of the cutting assembly, the cutting member 5 is thrown out to the operating area by the centrifugal force. The cutting member 5 in the operating area is in contact with the plants to be cut, so as to cut the plants. When the cutting member 5 collides with a hard object during cutting, due to the impact force generated by the collision, the movement trajectory of the cutting member 5 may be temporarily changed, and cutting portion of the cutting member 5 may rotate into the protection space 4, so as to protect the cutting member 5. When the lawn mower passes through the area where the hard object is located, the cutting member 5 is thrown out to the operating area again by the centrifugal force under the high-speed rotation of the cutting assembly.

In the embodiments of the present application, when the cutting member 5 is rotatably arranged in the protection space 4, elastic elements, such as springs and rubber pads, may be used for connection, so as to provide buffering and rotating functions when the cutting member 5 collides with a hard object.

In the embodiments of the present application, when the cutting member 5 is rotatably arranged in the protection space 4, the cutting member 5 may include one or more bearing seats for mounting bearings. The bearing seat is fixed to a fixing structure in the protection space 4 by bolts or other fastening means. The bearing is mounted in the bearing seat, an inner ring of the bearing is connected to the cutting member 5, and an outer ring of the bearing is fixed to the bearing seat. The cutting member 5 may further include a rotating shaft. One end of the rotating shaft is connected to the cutting member 5, and another end of the rotating shaft is mounted on a fixing structure in the protection space 4 by a sleeve. The cutting member 5 may also include other structures, so that the cutting member 5 is rotatably arranged in the protection space 4.

In another embodiment, this cutting assembly includes a base and a cutting member 5. The base is provided with a connecting structure 16, by which the base is connected to the lawn mower body 8. A groove is provided in the base, and the protection space 4 is formed in the groove. In a radial direction A of the base, the opening of the protection space 4 is directed away from the axis G of the base, and is located on a side of the base in the circumferential direction C of the base. The cutting member 5 is arranged in the protection space 4, and at least a portion of the cutting member 5 is located outside the protection space 4. The portion of the cutting member 5 located outside the protection space 4 is configured to perform the cutting operation.

In this embodiment, the protection space 4 formed by the groove is provided with an opening in the radial direction A of the base, the opening being directed away from the axis G of the base. That is, the opening of the groove in the base is located on a side of the base in the circumferential direction C of the base. The groove in the base has a certain depth in the radial direction A of the base, and a protection space 4 is formed inside the groove. The size of the protection space 4 depends on the depth of the groove in the radial direction A of the base and the height of the groove in the axial direction of the base. Depending on the size and shape of the cutting member 5 as well as the desired protection range, the groove with a suitable shape and size may be machined in the base. The groove may receive most of the cutting member 5, and may ensure that the cutting member 5 has sufficient room for movement during operation.

In this embodiment, the shape, size and depth of the groove may be determined depending on the size and shape of the cutting member 5 as well as the desired protection degree. The groove may be implemented by milling, drilling or casting, so as to ensure the accuracy and durability of the groove.

The cutting assembly provided in the present application is connected to the lawn mower body 8 through the cutter head 1, and the cutting assembly may perform cutting operations on lawns in different areas along with the movement of the lawn mower body 8. Since the blocking members 3 are arranged between the cutter head 1 and the protection member 2, and each of the plurality of blocking members 3 includes the protrusion 31 protruding toward the center of the cutter head 1, when the protection member 2 is snap-fitted with the cutter head 1, the protrusion 31 of the blocking member 3, the cutter head 1 and the protection member 2 form and enclose a protection space 4. Since there are a plurality of blocking members 3 and the plurality of blocking members 3 are arranged in the circumferential direction of the protection member 2, there are also a plurality of protection spaces 4, and the plurality of protection spaces 4 are arranged in the circumferential direction of the protection member 2. The protection space 4 is located on a side of the protrusion 31 proximate to the edge of the cutter head 1, that is, the cutting member 5 is located on a side of the protrusion 31 proximate to the edge of the cutter head 1. Since the cutting member 5 extends at least partially to the outside of the protection space 4, that is, another portion of the cutting member 5 is located in the protection space 4, a portion of the cutting member 5 extending to the outside of the protection space 4 is configured for cutting plants, and the portion of the cutting member 5 located in the protection space 4 may be protected by the protection space 4 from contacting with dirt and weeds. Since the cutting member 5 is rotatably arranged in the protection space 4, when the cutting member 5 hits a hard object, the cutting member 5 may rotate into the protection space 4, thereby reducing the damage to the cutting member 5. Thus, with the cutting assembly provided in the present application, the phenomenon of the mud sticking and the grass winding may be reduced, and the damage to the cutting member 5 may be reduced.

With reference to FIG. 3, FIG. 6 and FIG. 8, in some embodiments of the present application, each of the plurality of blocking members 3 further includes a blocking part 32. The blocking part 32 is arranged along a peripheral edge of the protection member 2 or a peripheral edge of the cutter head 1, and an end of the blocking part 32 is connected to an end of the protrusion 31.

In the embodiments of the present application, an end of the blocking part 32 is connected to an end of the protrusion 31. Since the blocking part 32 is arranged along the peripheral edge of the protection member 2 or the peripheral edge of the cutter head 1, the blocking part 32 is closer to the peripheral edge of the protection member 2 or the peripheral edge of the cutter head 1 compared to the protrusion 31. Since the protrusion 31 of the blocking member 3 protrudes toward the center of the cutter head 1, the end of the protrusion 31 is directed toward a side away from the center of the cutter head 1, that is, the end of the protrusion 31 is directed toward the side where the blocking part 32 is located. In this case, the end of the blocking part 32 is connected to the end of the protrusion 31, so that the blocking part 32 and the protrusion 31 may form a whole. When the cutter head 1 is snap-fitted with the protection member 2, the blocking part 32 and the protrusion 31 are located in the gap between the cutter head 1 and the protection member 2.

In the embodiments of the present application, the blocking part 32 and the protrusion 31 may extend between the cutter head 1 and the protection member 2 by a same length. The end of the blocking part 32 and the end of the protrusion 31 may form an integral structure, and may be connected to each other by welding.

In the cutting assembly provided in the embodiments of the present application, since the end of the blocking part 32 is connected to the end of the protrusion 31, and the blocking part 32 is arranged along the peripheral edge of the protection member 2 or the peripheral edge of the cutter head 1, when the cutter head 1 is snap-fitted with the protection member 2, the blocking part 32 and the protrusion 31 may be abutted between the opposite sides of the cutter head 1 and the protection member 2, so that the cutter head 1, the protection member 2, the blocking part 32 and the protrusion 31 form and enclose a space, thereby blocking the external dust and other impurities from entering the region between the cutter head 1 and the protection member 2.

In some embodiments of the present application, the cutting assembly further includes a fixing member 6. The fixing member 6 sequentially passes through the cutter head 1, the cutting member 5 and the protection member 2 to rotatably arrange the cutting member 5 in the protection space 4.

In the embodiments of the present application, the fixing member 6 may be a pin, a snap, a screw, a rivet, or the like. Exemplarily, the fixing member 6 is a screw. The screw sequentially passes through the cutter head 1, the cutting member 5 and the protection member 2, and there is a rotational gap between the cutting member 5 and the screw, so that the cutting member 5 may rotate relative to the screw. Thus, the cutting member 5 is rotatably arranged in the protection space 4.

In some embodiments of the present application, the cutting assembly further includes a fixing member 6. The fixing member 6 sequentially passes through the cutter head 1 and the protection member 2, and is arranged proximate to the blocking part 32.

In the embodiments of the present application, the fixing member 6 may be a pin, a snap, a screw, a rivet, or the like. The fixing member 6 is arranged proximate to the blocking part 32, so that the cutting member 5 may be fixed at a fixed position in the protection space 4 proximate to the blocking part 32. Since the blocking part 32 is arranged along the peripheral edge of the protection member 2 or the peripheral edge of the cutter head 1, the cutting member 5 is arranged proximate to the peripheral edge of the protection member 2 or the peripheral edge of the cutter head 1, so that a portion of the cutting member 5 extends beyond the protection space 4 to cut the plants. With reference to FIG. 3 and FIG. 8, in some embodiments of the present application, the cutting member 5 includes a mounting through-hole 51, the mounting through-hole being configured for rotatably arranging the cutting member 5 in the protection space 4. The cutting member 5 further includes a cutting end 52 arranged away from the mounting through-hole 51. A distance between a bottom surface 311 of the protrusion 31 and the mounting through-hole 51 is greater than a distance between the cutting end 52 and the mounting through-hole 51. The bottom surface 311 is a surface of the protrusion 31 parallel to an axis of the cutter head 1.

In the embodiments of the present application, the mounting through-hole 51 may have a circular shape, a square shape, a polygonal shape, or the like. A diameter of the mounting through-hole 51 may be adjusted according to a diameter of the fixing member 6. The diameter of the mounting through-hole 51 may be equal to the diameter of the fixing member 6, or may be greater than the diameter of the fixing member 6. Exemplarily, when the diameter of the mounting through-hole 51 is greater than the diameter of the fixing member 6, the cutting member 5 can easily rotate around the fixing member 6.

In the embodiments of the present application, the cutting member 5 may be a blade with an integral structure, or the cutting member 5 may have a segmented structure. Exemplarily, a region of the cutting member 5 arranged in the protection space may not be provided with a cutting edge for cutting, while the cutting end 52 arranged away from the mounting through-hole 51 (i.e., the region where the cutting operation is actually performed) may be provided with a cutting edge, a saw blade, or the like.

In the embodiments of the present application, the bottom surface 311 is a surface of the protrusion 31 parallel to the axis of the cutter head 1, and the distance between the bottom surface 311 of the protrusion 31 and the mounting through-hole 51 is greater than the distance between the cutting end 52 and the mounting through-hole 51, so that the cutting member 5 may rotate a single revolution around the mounting through-hole 51 in the protection space 4. That is, the cutting portion of the cutting member 5 may be completely received in the protection space 4.

The cutting member 5 is rotatably arranged in the protection space 4. When the cutting member 5 collides with a hard object during cutting, the cutting member 5 rotates back into the protection space 4 under the collision force, thereby reducing the situation in which the cutting member 5 is damaged or flies out due to the direct collision. This enhances the safety of the cutting assembly, while reducing wear and damage to the cutting member 5.

In the cutting assembly provided in the embodiments of the present application, the mounting through-hole 51 provides a stable rotational support for the cutting member 5. The distance between the bottom surface 311 of the protrusion 31 and the mounting through-hole 51 is greater than the distance between the cutting end 52 and the mounting through-hole 51, so that when the blade rotates in the protection space 4, the blade does not contact the bottom surface 311 of the groove, thereby smoothing the rotation of the blade, while improving the protection effect of the protection space 4 on the cutting member 5.

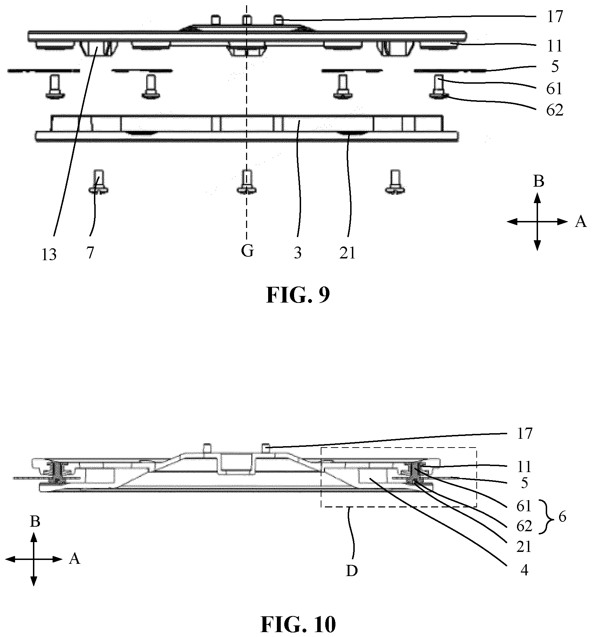

With reference to FIG. 8, FIG. 9 and FIG. 10, in some embodiments of the present application, one of the cutter head 1 and the protection member 2 is provided with a first mounting part 11 which mates with the fixing member 6. The fixing member 6 is connected to the first mounting part 11, and the cutting member 5 is sleeved on the fixing member 6 by means of the mounting through-hole 51.

In the embodiments of the present application, the fixing member 6 is configured to connect the cutting member 5 to the cutter head 1 or the protection member 2. The fixing member 6 may be a pin, and the first mounting part 11 may be a hole or a slot which mates with the pin. The pin passes through the mounting through-hole 51 and the first mounting part 11 to realize the connection between the cutting member 5 and the cutter head 1 or the protection member 2. The fixing member 6 may also be a snap, and the first mounting part 11 may be a slot or an opening which mates with the snap. An end of the snap passes through the mounting through-hole 51 and cooperates with the slot or the opening on the first mounting part 11, and another end of the snap is abutted against the cutting member 5, so as to fix the cutting member 5. The fixing member 6 may also be a screw, a rivet, or the like. In the cutting assembly provided in the embodiments of the present application, the connection between the fixing member 6 and the first mounting part 11 provides the stable support for the cutting member 5. The cutting member 5 is sleeved on the fixing member 6 by means of the mounting through-hole 51, so that the cutting member 5 may be firmly fixed in the desired position, and the cutting member 5 may also rotate around the fixing member 6 in the protection space 4. Meanwhile, contact of the fixing member 6 for fixing the cutting member 5 with grass or other objects on the ground may be reduced, the risk of loosening of the fixing member 6 may be reduced, and the problem that the cutting member 5 flies out after the fixing member 6 is loosened may be reduced.

With reference to FIG. 3, FIG. 6, FIG. 10 and FIG. 11, in some embodiments of the present application, one of the cutter head 1 and the protection member 2, which is not provided with the first mounting part 11, is provided with an evading recess 21. The evading recess 21 is arranged in alignment with the first mounting part 11. A first end 61 of the fixing member 6 is connected to the first mounting part 11, and a second end 62 of the fixing member 6 is received in the evading recess 21.

In the embodiments of the present application, at least one of the cutter head 1 and the protection member 2 is provided with a first mounting part 11 which mates with the fixing member 6. When the cutter head 1 is provided with a first mounting part 11, the protection member 2 is provided with an evading recess 21 which is arranged in alignment with the first mounting part 11. When the protection member 2 is provided with a first mounting part 11, the cutter head 1 is provided with an evading recess 21 which is arranged in alignment with the first mounting part 11.

In the embodiments of the present application, a size of the evading recess 21 may be adjusted according to a size of the second end 62 of the fixing member 6. Exemplarily, when the fixing member 6 is a screw, the first end 61 of the screw (for example, the tip or end of the screw) passes through the mounting through-hole 51, and the second end 62 of the screw (for example, the head of the screw) is abutted against the cutting member 5. In this case, the second end 62 of the screw may be received in the evading recess, so as to reduce the space between the protection member 2 and the cutter head 1 occupied by the head of the screw.

In the cutting assembly provided in the embodiments of the present application, the first end 61 of the fixing member 6 is connected to the first mounting part 11, and the second end 62 of the fixing member 6 is received in the evading recess 21. Thus, the distance between the protection member 2 and the cutter head 1 may be shortened in the axial direction of the cutter head 1, so that the structure between the cutter head 1 and the protection member 2 is more compact. Further, when the cutting assembly is operating, the distance between the protection member 2 and the ground may be further, thereby reducing the loss of the protection member 2, and improving the mowing effect.

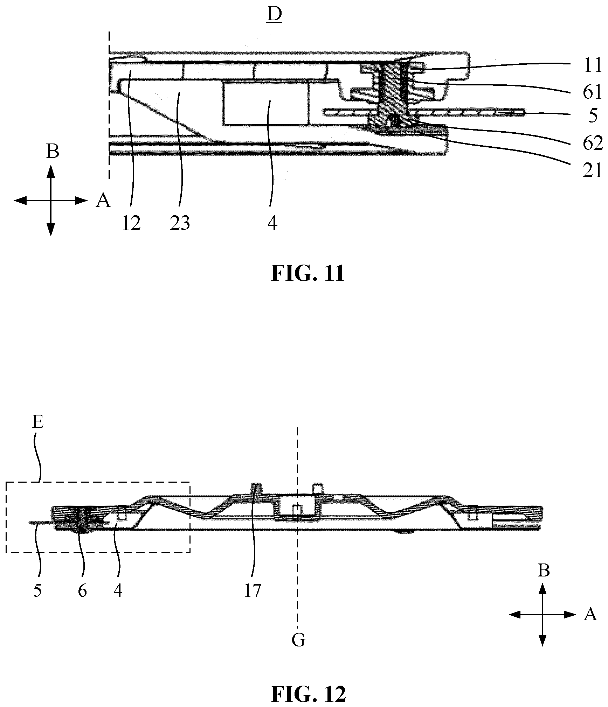

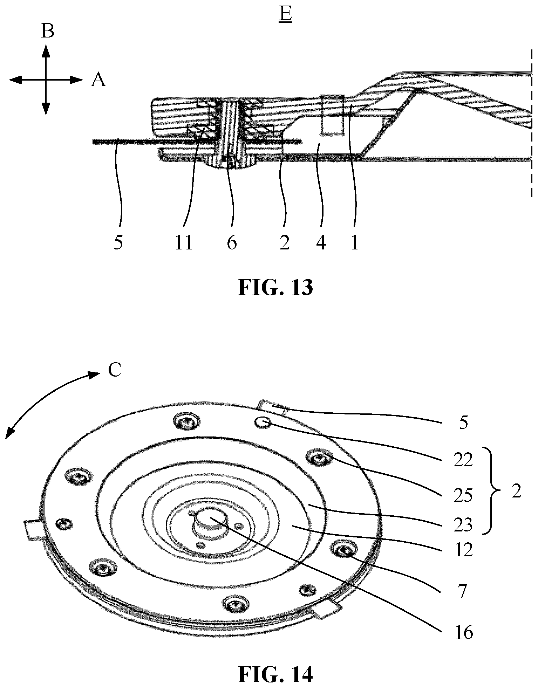

With reference to FIG. 12, FIG. 13, FIG. 14 and FIG. 15, in some embodiments of the present application, one of the cutter head 1 and the protection member 2 is provided with a first mounting part 11 which mates with the fixing member 6, and another one of the cutter head and the protection member is provided with a detaching through-hole 22. The detaching through-hole 22 is arranged in alignment with the first mounting part 11, and the fixing member 6 passes through the detaching through-hole 22 and is connected to the first mounting part 11.

In the embodiments of the present application, the detaching through-hole 22 is arranged in alignment with the first mounting part 11, and the fixing member 6 passes through the detaching through-hole 22 and is connected to the first mounting part 11 to connect the cutting member 5 in the protection space 4. Thus, one of the cutter head 1 and the protection member 2 is provided with the first mounting part 11, and another one of the cutter head and the protection member is provided with the detaching through-hole 22 which mates with the first mounting part 11.

In the embodiments of the present application, the type of the fixing member 6 may be selected according to actual needs, such as a bolt, a screw, a pin, a snap, or the like. The specification of the fixing member 6 mates with the detaching through-hole 22 and the first mounting part 11, so as to improve the fastness and reliability of connection.

In the embodiments of the present application, exemplarily, with reference to FIG. 12, FIG. 13 and FIG. 14, the fixing member 6 is a screw, the protection member 2 is provided with the detaching through-hole 22 which mates with the specification of the screw, the cutting member 5 is provided with a mounting through-hole 51 which mates with the specification of the screw, and the cutter head 1 is provided with the first mounting part 11. The first mounting part 11 is a threaded hole which mates with the specification of the screw. The screw passes through the detaching through-hole 22 in the protection member 2, passes through the mounting through-hole 51 in the cutting member 5, and is connected to the threaded hole in the cutter head 1, so as to connect the cutting member 5 in the protection space 4.

In the cutting assembly provided in the embodiments of the present application, due to the alignment design between the detaching through-hole 22 and the first mounting part 11, the fixing member 6 may directly pass through the detaching through-hole 22, to be firmly connected to the first mounting part 11, thereby simplifying the installation process, and improving the assembly efficiency. When it is necessary to replace or maintain the cutter head 1 or the protection member 2, the cutter head 1 or the protection member 2 may be separated from the first mounting part 11 by loosening the fixing member 6, thereby saving time and labor costs.

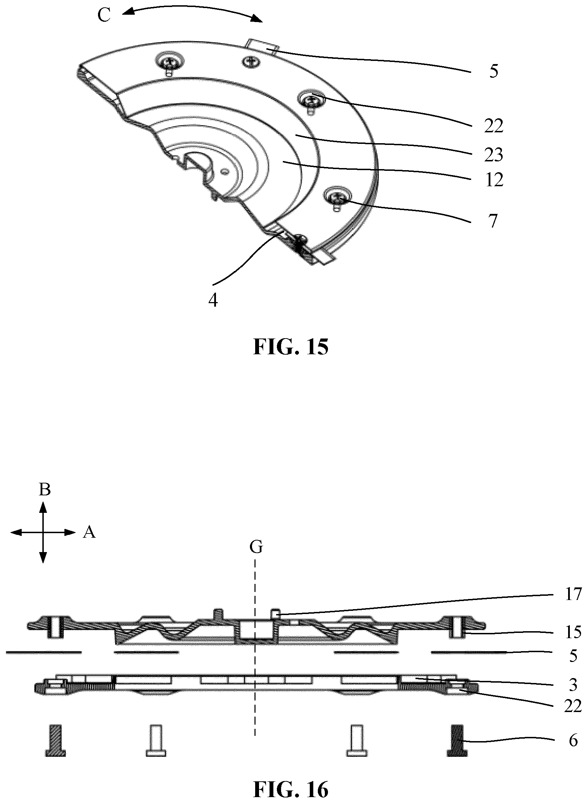

With reference to FIG. 16, FIG. 17 and FIG. 18, in some embodiments of the present application, one of the cutter head 1 and the protection member 2 is provided with a boss 15. The boss 15 extends from the cutter head 1 or the protection member 2 into the protection space 4 in an extension direction of the axis, and the boss 15 mates with the mounting through-hole 51. The cutting member 5 is sleeved on the boss 15 by means of the mounting through-hole 51.

In the embodiments of the present application, one of the cutter head 1 and the protection member 2 is provided with a boss 15. The cutting member 5 is sleeved on the boss 15 by means of the mounting through-hole 51. The cutting member 5 may rotate around the boss 15. The mounting through-hole 51 on the cutting member 5 may be adjusted according to a size of the boss 15.

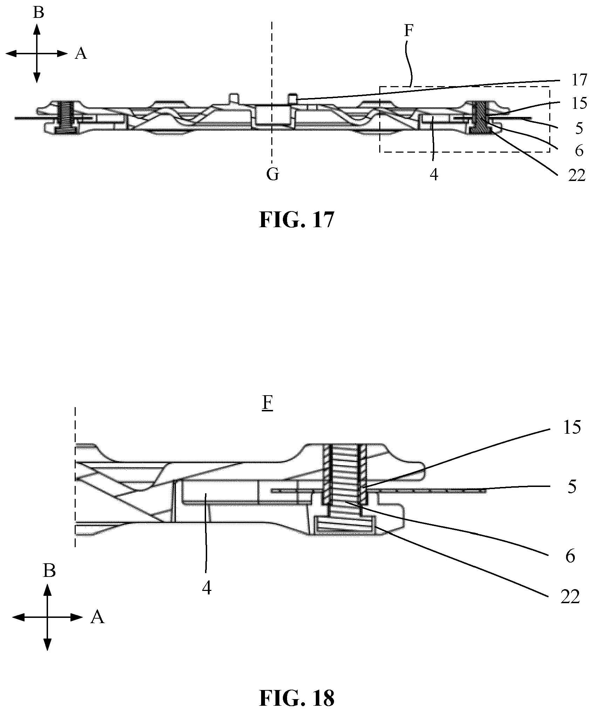

In the embodiments of the present application, the boss 15 may be arranged on any one of the cutter head 1 and the protection member 2. Exemplarily, with reference to FIG. 17 and FIG. 18, the cutter head 1 is provided with a boss 15. A threaded hole is provided in the boss 15. The boss 15 extends from the cutter head 1 into the protection space 4 in an extension direction of the axis G. The cutting member 5 is sleeved on the boss 15 by means of the mounting through-hole 51. The protection member 2 is provided with a detaching through-hole 22 which is arranged in alignment with the boss 15. The fixing member 6 is connected to the threaded hole in the boss 15 through the detaching through-hole 22, so as to fix the cutting member 5 to the boss 15.

In another embodiment, the cutter head 1 is provided with a boss 15. The boss 15 extends from the cutter head 1 into the protection space 4 in an extension direction of the axis G. The cutting member 5 is sleeved on the boss 15 by means of the mounting through-hole 51. When the protection member 2 is mounted on the cutter head 1, the boss 15 is abutted against the protection member 2, so that the cutting member 5 is arranged in the protection space 4.

In the cutting assembly provided in the embodiments of the present application, the cutting member 5 is sleeved on the boss 15 by means of the mounting through-hole 51, so that a stable mechanical connection is formed between the cutting member 5 and the boss 15, which not only improves the firmness of the cutting member and the boss, but also may prevent the cutting member 5 from loosening and falling off during operation, thereby improving the overall stability and safety of the cutting assembly.

With reference to FIG. 4, FIG. 7 and FIG. 8, in some embodiments of the present application, the protection member 2 includes an abutting part 23 in a region proximate to an axis of the cutter head 1. The abutting part 23 is provided with a through opening 24 in an extension direction of the axis. The through opening 24 is coaxial with the axis. The abutting part 23 is abutted against an abutting region 12 of the cutter head 1.

In the embodiments of the present application, the abutting part 23 is provided with the through opening 24 in the extension direction of the axis. Since the abutting part 23 is a region of the protection member 2 proximate to the axis of the cutter head 1, that is, the abutting part 23 is coaxial with the cutter head 1, the stability of the protection member 2 may be improved. The through opening 24 may reduce the weight of the protection member 2, reduce the energy consumption, and improve the cutting efficiency of the cutting assembly. The shape of the through opening 24 may be circular, square, or the like.

With reference to FIG. 4, FIG. 7 and FIG. 8, in some embodiments of the present application, the abutting part 23 extends from the region of the protection member 2 proximate to the axis of the cutter head 1 to a side of the protection member proximate to the cutter head 1. A shape of the abutting region 12 mates with a shape of the abutting part 23.

In the embodiments of the present application, the protection member 2 includes an abutting part 23 in the region proximate to the axis G. The main function of the abutting part 23 is to abut against the abutting region 12 of the cutter head 1, so that the relative position between the protection member 2 and the cutter head 1 is stabilized, and the gap between the protection member 2 and the cutter head 1 can be closed at the abutting part 23 and the abutting region 12, so as to reduce impurities such as dirt from entering the region between the protection member 2 and the cutter head 1. The shape of the abutting part 23 mates with the shape of the abutting region 12, so as to improve the contact and positioning between the protection member 2 and the cutter head 1. The shapes of the abutting part 23 and the abutting region 12 may include a flat shape, a curved shape, or a complex shape with a specific profile, which may be determined according to the needs of the cutting assembly.

In the cutting assembly provided in the embodiments of the present application, since the abutting part 23 of the protection member 2 in a region proximate to the axis G is provided with a through opening 24, the protection member 2 forms an annular shape, so as to reduce the contact area between a protection plate of the cutter head 1 and the grass, reduce the power consumption, and reduce the weight. Since the abutting part 23 extends from the protection member 2 to a side of the protection member proximate to the cutter head 1, and is abutted against the abutting region 12 of the cutter head 1, after the abutting part 23 is abutted against the abutting region 12, an edge of the through opening 24 in the protection member 2 may be abutted against the cutter head 1, thereby reducing the entry of dirt and other impurities into the region between the protection member 2 and the cutter head 1 through the through opening 24.

In some embodiments of the present application, an outer diameter of the protection member 2 is less than or equal to an outer diameter of the cutter head 1.

In the embodiments of the present application, the material of the protection member 2 may have properties such as good wear resistance, corrosion resistance, impact resistance, and appropriate elasticity. Further, by optimizing the process parameters such as thickness, hardness and surface treatment of the material of the protection member 2, the durability and safety of the protection member 2 may be further improved.

In the cutting assembly provided in the embodiments of the present application, since the outer diameter of the protection member 2 is less than or equal to the outer diameter of the cutter head 1, the contact area between the protection member 2 and the surrounding environment during operation of the cutting assembly is smaller, thereby reducing the heat and wear of the protection member 2 due to friction. This helps to extend the service life of the protection member 2 and the cutter head 1, and reduce the noise and vibration due to friction.

In the embodiments of the present application, the cutter head 1 is detachably connected to the protection member 2. The connecting structure 16 between the cutter head 1 and the protection member 2 may use a bolt connection, a snap connection, a magnetic connection, or the like. Exemplarily, with reference to FIG. 8, FIG. 14 and FIG. 15, the cutter head 1 is provided with a connecting hole 13, and the protection member 2 is provided with a connecting part 25. The connecting hole 13 is arranged in alignment with the connecting part 25. A connecting member 7 passes through the connecting hole 13 and the connecting part 25 to detachably connect the cutter head 1 to the protection member 2. There may be any number of connecting holes 13 and connecting parts 25, and the connecting member 7 may be a screw, a rivet, or the like, which is not limited in the present application.

In the cutting assembly provided in the embodiments of the present application, since the cutter head 1 is detachably connected to the protection member 2, the maintenance and replacement of the cutter head 1, the protection member 2 or the cutting member 5 are convenient, and the installation is simple.

With reference to FIG. 3 and FIG. 5, in some embodiments of the present application, the cutter head 1 is provided with a plurality of reinforcing parts 14. Each of the plurality of reinforcing parts 14 extends on the cutter head 1 in a radial direction A of the cutter head 1, and the plurality of reinforcing parts are distributed in a circumferential direction C of the cutter head 1.

In the embodiments of the present application, the reinforcing part 14 may be of various shapes, such as a rib strip, a stiffener, a corrugated structure, a grid structure, or the like. These shapes may effectively increase the strength of the cutter head 1, thereby improving the bending resistance and torsion resistance of the cutter head. A size (for example, height, width, thickness) of the reinforcing part 14 should be determined according to the specific size, the load required to be carried and the material properties of the cutter head 1. Generally, the larger the reinforcing part 14 is, the greater the reinforcing effect is.

In another embodiment, the reinforcing parts 14 may be non-uniformly distributed. For example, the density of the reinforcing parts 14 and the size of each reinforcing part are increased in an area where the cutter head 1 is subjected to a larger force, and are correspondingly decreased in an area where the cutter head is subjected to a smaller force.

In the cutting assembly provided in the embodiments of the present application, since the cutter head 1 is provided with the reinforcing parts 14, each of which extends in the axis direction B and which are distributed in the circumferential direction C of the cutter head 1, the strength of the cutter head 1 may be enhanced, and the stability of the cutter head 1 during rotation at a high speed may be improved.

The above descriptions are only the preferred embodiments of the present application, and are not intended to limit the patent scope of the present application. Any equivalent structural changes or equivalent process changes made by the contents of the specification and accompanying drawings of the present application, or directly/indirectly applied to other related technical fields, are included in the patent protection scope of the present application.

## Claims

1. A cutting assembly for connecting to a lawn mower body (8), **characterized in that** the cutting assembly comprises:
a cutter head (1), wherein the cutter head is configured to be connected to the lawn mower body;
a protection member (2), wherein the protection member is snap-fitted with the cutter head (1), and the protection member (2) and the cutter head (1) form and enclose a protection space (4); and
a cutting member (5), wherein the cutting member is rotatably arranged in the protection space (4), the cutting member (5) extends at least partially to the outside of the protection space (4), and the cutting member (5) is configured for a cutting operation.

2. The cutting assembly according to claim 1, wherein there are a plurality of protection spaces (4), and the plurality of protection spaces are arranged in a circumferential direction of the protection member (2).

3. The cutting assembly according to claim 1, wherein the cutting assembly further comprises a plurality of blocking members (3), wherein the plurality of blocking members are provided between the cutter head (1) and the protection member (2), each of the plurality of blocking members (3) comprises a protrusion (31) protruding toward a center of the cutter head (1), wherein the protrusion (31), the protection member (2), and the cutter head (1) form and enclose the protection space (4), and the protection space is located on a side of the protrusion (31) proximate to an edge of the cutter head (1).

4. The cutting assembly according to claim 3, **characterized in that** each of the plurality of blocking members (3) further comprises a blocking part (32), wherein the blocking part is arranged along a peripheral edge of the protection member (2) or a peripheral edge of the cutter head (1), and an end of the blocking part (32) is connected to an end of the protrusion (31).

5. The cutting assembly according to claim 4, **characterized in that** the cutting assembly further comprises a fixing member (6),
wherein the fixing member sequentially passes through the cutter head (1), the cutting member (5) and the protection member (2) to rotatably arrange the cutting member (5) in the protection space (4).

6. The cutting assembly according to claim 4, **characterized in that** the cutting assembly further comprises a fixing member (6), wherein the fixing member sequentially passes through the cutter head (1) and the protection member (2), and is arranged proximate to the blocking part (32).

7. The cutting assembly according to claim 5 or 6, **characterized in that** the cutting member (5) comprises a mounting through-hole (51), the mounting through-hole being configured for rotatably arranging the cutting member (5) in the protection space (4), wherein the cutting member (5) further comprises a cutting end (52) arranged away from the mounting through-hole (51), and wherein a distance between a bottom surface (311) of the protrusion (31) and the mounting through-hole (51) is greater than a distance between the cutting end (52) and the mounting through-hole (51), the bottom surface (311) being a surface of the protrusion (31) parallel to an axis of the cutter head (1).

8. The cutting assembly according to claim 7, **characterized in that** one of the cutter head (1) and the protection member (2) is provided with a first mounting part (11) which mates with the fixing member (6), wherein the fixing member (6) is connected to the first mounting part (11), and the cutting member (5) is sleeved on the fixing member (6) by means of the mounting through-hole (51).

9. The cutting assembly according to claim 8, **characterized in that** one of the cutter head (1) and the protection member (2), which is not provided with the first mounting part (11), is provided with an evading recess (21), wherein the evading recess is arranged in alignment with the first mounting part (11), a first end (61) of the fixing member (6) is connected to the first mounting part (11), and a second end (62) of the fixing member (6) is received in the evading recess (21).

10. The cutting assembly according to claim 7, **characterized in that** one of the cutter head (1) and the protection member (2) is provided with a first mounting part (11) which mates with the fixing member (6), and another one of the cutter head (1) and the protection member (2) is provided with a detaching through-hole (22), wherein the detaching through-hole is arranged in alignment with the first mounting part (11), and the fixing member (6) passes through the detaching through-hole (22) and is connected to the first mounting part (11);
and/or
one of the cutter head (1) and the protection member (2) is provided with a boss (15), wherein the boss extends from the cutter head (1) or the protection member (2) into the protection space (4) in an extension direction of the axis, and the boss (15) mates with the mounting through-hole (51), and wherein the cutting member (5) is sleeved on the boss (15) by means of the mounting through-hole (51).

11. The cutting assembly according to any one of claims 1 to 6, **characterized in that** the protection member (2) comprises an abutting part (23) in a region proximate to an axis of the cutter head (1), wherein the abutting part (23) is provided with a through opening (24) in an extension direction of the axis, the through opening (24) being coaxial with the axis, and wherein the abutting part (23) is abutted against an abutting region (12) of the cutter head (1).

12. The cutting assembly according to claim 11, **characterized in that** the abutting part (23) extends from the region of the protection member (2) proximate to the axis of the cutter head (1) to a side of the protection member (2) proximate to the cutter head (1), and a shape of the abutting region (12) mates with a shape of the abutting part (23).

13. The cutting assembly according to any one of claims 1 to 6, **characterized in that** an outer diameter of the protection member (2) is less than or equal to an outer diameter of the cutter head (1);
the cutter head (1) is provided with a plurality of reinforcing parts (14), wherein each of the plurality of reinforcing parts (14) extends on the cutter head (1) in a radial direction of the cutter head, and the plurality of reinforcing parts (14) are distributed in a circumferential direction of the cutter head.

14. A lawn mower, **characterized in that** the lawn mower comprises:
a lawn mower body (8),
a cutting actuator, wherein a fixed end of the cutting actuator is arranged on the lawn mower body; and
the cutting assembly according to any one of claims 1 to 13, wherein a connecting structure (16) of the cutter head (1) is connected to an output end of the cutting actuator, and the cutting actuator is capable of driving the cutting assembly into rotation.

15. The lawn mower according to claim 14, **characterized in that** the cutter head (1) further comprises a positioning structure (17), and the output end is provided with a positioning part which mates with the positioning structure (17), wherein the positioning structure is connected to the positioning part to limit a position of the cutter head (1) relative to the output end.
